# EUROPEAN PATENT SPECIFICATION

(11) **EP 3 562 880 B1**
(45) Date of publication and mention of the grant of the patent: **24.04.2024**
(21) Application number: 17913101.6
(22) Date of filing: 23.11.2017
(51) Int. Cl.: C08L 53/02, C08L 75/04, C08L 75/06, C08L 95/00

(54) **A BITUMINOUS MIXTURE COMPRISING POLYURETHANE OBTAINED BY A POLYMERIZATION REACTION OF BHET OBTAINED FROM CHEMICAL DEPOLYMERISATION OF PET WASTE AND A PREPARATION METHOD THEREOF**
BITUMINÖSE MISCHUNG MIT POLYURETHAN AUS EINER POLYMERISATIONSREAKTION VON BHET AUS EINER CHEMISCHEN DEPOLYMERISATION VON PET-ABFÄLLEN UND HERSTELLUNGSVERFAHREN DAFÜR
MÉLANGE BITUMINEUX COMPRENANT DU POLYURÉTHANE OBTENU PAR UNE RÉACTION DE POLYMÉRISATION D'HYDROXYÉTHYLÈNE THÉRÉPHTHALATE OBTENU PAR RECYCLAGE CHIMIQUE DE POLYÉTHYLÈNE THÉRÉPHTHALATE ET PROCÉDÉ DE PRÉPARATION DE CE MÉLANGE

(30) Priority: 30.12.2016 TR 201620225
(43) Date of publication of application: 06.11.2019
(73) Proprietor: Turkiye Petrol Rafinerileri Anonim Sirketi Tupras, 41780 Korfez/Kocaeli (TR)
(72) Inventor: CANIAZ, Ramazan Oguz, 41790 Korfez/Kocaeli (TR); CETINTAS, Refika, 71001 Kirikkale (TR); ARCA, Serhat, 41790 Korfez/Kocaeli (TR); BASKENT, Emel, 41790 Korfez/Kocaeli (TR); KOCAMAN, Elif, 41790 Korfez/Kocaeli (TR); KOSTERELI, Ziya, 41790 Korfez/Kocaeli (TR); YASAR, Muzaffer, 34820 Avcilar/Istanbul (TR); GURDAL, Savas, Avcilar/Istanbul (TR)
(74) Representative: Cayli, Hülya
(86) International application number: PCT/TR2017/050594
(87) International publication number: WO 2019/009836

(56) References cited:
- EP-A1- 2 924 096
- WO-A1-97/17405
- US-A- 5 371 121
- US-A1- 2010 297 902
- US-A1- 2015 240 082
- US-B2- 6 759 454
- Robert N. Hunter ET AL: "The Shell Bitumen Handbook, Sixth Edition" In: "The Shell Bitumen Handbook, Sixth Edition", 1 January 2015 (2015-01-01), ICE Publishing, Westminster, London, UK, XP055552520, ISBN: 978-0-7277-5837-8 pages v-xi, the whole document
- "User Guidelines for Waste and By-Product Materials in Pavement Construction", , 1 January 1998 (1998-01-01), XP055240738, Retrieved from the Internet: URL:http://isddc.dot.gov/OLPFiles/FHWA/009 686.pdf
- JOHN O. AKINDOYO ET AL: "Polyurethane types, synthesis and applications - a review", RSC ADVANCES, vol. 6, no. 115, 1 January 2016 (2016-01-01), pages 114453-114482, XP055561038, DOI: 10.1039/C6RA14525F
- Leian Bartolome ET AL: "Recent Developments in the Chemical Recycling of PET" In: "Material Recycling - Trends and Perspectives", 16 March 2012 (2012-03-16), InTech, XP055560428, ISBN: 978-953-51-0327-1 DOI: 10.5772/33800, cited in the application the whole document
- MAHREZ ABDELAZIZ ET AL: "Rheological evaluation of bituminous binder modified with waste plastic material", 5TH INTERNATIONAL SYMPOSIUM ON HYDROCARBONS & CHEMISTRY (ISHC5), 23 May 2010 (2010-05-23), XP055560432, cited in the application
- Gity Mir Mohamad Sadeghi ET AL: "From PET Waste to Novel Polyurethanes" In: "Material Recycling - Trends and Perspectives", 16 March 2012 (2012-03-16), InTech, XP055560491, ISBN: 978-953-51-0327-1 DOI: 10.5772/31642, paragraph [3.1.2]; figures 1,4,6 paragraph [0004] the whole document
- IZQUIERDO M A ET AL: "Novel stable MDI isocyanate-based bituminous foams", FUEL, IPC SCIENCE AND TECHNOLOGY PRESS, GUILDFORD, GB, vol. 90, no. 2, 1 February 2011 (2011-02-01), pages 681-688, XP027511032, ISSN: 0016-2361, DOI: 10.1016/J.FUEL.2010.10.002 [retrieved on 2010-10-14]

## Description

### Technical Field

The present invention relates to a modified bituminous mixture comprising only polyurethane synthesized through a polymerization reaction using waste polyethylene terephthalate (PET) and/or comprising the polyurethane together with Styrene-Butadiene-Styrene tri-block copolymer, as well as to a preparation method thereof.

### Prior Art

Bitumen is a petroleum residue obtained as a bottom product of distillation units following the processing of crude oil and separating the contained light hydrocarbons therefrom by means of distillation methods. Bitumen, the bottom product of vacuum distillation units of refineries, is a hydrocarbon with high molecular weight. Bitumen contains sulfurous compounds and high amounts of heteroatoms and has high viscosity.

Bitumen, having a very wide range of utility, is particularly used in asphalt pavements and in making roofs and papers waterproof. Around 85% of bitumen produced is used in asphalt compositions employed in the pavement of roads and serves as a binder in asphalt mixtures. The amount of bitumen in asphalt mixtures is 4 to 7%, but is still the most important agent determining the performance of an asphalt pavement due to its binding properties.

However, bitumen with a substantial role in asphalt compositions as pointed out above, fails in fulfilling ideal high-performance criteria applicable to bridges, crossroads, and highways where extreme hot or colt climates are prevalent. As a result of bitumen, acting as a binder, failing to show the expected performance, some problems are encountered in the form of heat- and fatigue-induced cracks or rutting in asphalt pavements. The number of vehicles used worldwide increases year by year as a function of human population and as a result of this, more deformations are encountered on highways. Almost yearly, asphalt pavements are renewed and maintenance-repair works are done, leading to economic problems. In this context, the production and use of high-performance bituminous materials gain importance and become a necessity.

On the other hand, waste plastics have become a fast-growing problem with the increasing use of plastics. The PET plastic, in turn, is one of the plastic products produced and used in rather high amounts based on its easy production procedures and low costs. For this reason, many works are being done for the recycling of waste PETs and for their use in different areas. L. Bartolome et al. studied various reaction conditions applicable to the chemical recycling of PET and the resulting products from these reactions (L. Bartolome, Recent Developments in the Chemical Recycling of PET, Material Recycling - Trends and Perspectives). The direct use of PET in the form of waste without recycling is also known from the prior art. In a work conducted by Abdelaziz Mahrez and Mohammed Rehan Karim, the influence of incorporation of PET wastes into bitumen at 2-4-6-8% using a high-speed mixer was researched (Abdelaziz Mahrez et al., Rheological evaluation of Bituminous Binder Modified with Waste Plastic Material).

When a search is made in the prior art in terms of solving these problems, it is seen that bituminous products are modified using various additives, for use in regions requiring high-performance asphalt properties. In such efforts aiming at achieving more durable asphalt products using high-performance modified bitumen, it is seen that bitumen is modified particularly with a styrene-butadiene-styrene (SBS) polymer additive. Jiqing Zhu et al. reviewed the state of art of polymer-modified bitumen and summarized the data regarding polymer-modified bitumen. For instance, the patent no. US6759454B2 describes a bituminous composition for use in asphalt, roof, insulation and pipe linings, containing 0.5-25% of SBS copolymer. The patent US5371121A, in turn, describes the use of bitumen comprising 0.015-0.075% by mass of sulfur and an SBS polymer additive in hot-mixture asphalt applications. However, SBS is a relatively expensive polymeric additive. The use of this material increases the costs. Therefore, there is a need for reducing the amount of SBS used in bitumen modifications and for novel low-cost high-performance polymeric additives.

Another patent document no. EP2924096A1 discloses a method to prepare Polymer Modified Bitumen by using terephthalamide additives. According to this document, said terephthalamide additives are derived from waste PET. However, modified bitumen derived according to this document provide a limited performed when used in asphalt.

### Brief Description of Invention

A process is developed according to the present invention to synthesize polyurethane through a polymerization reaction of a diisocyanate monomer, diol monomer and a chain extender, the process comprising the steps of adding MDI as an isocyanate monomer into a reactor having a mechanical mixer; adding into the MDI-containing reactor BHET monomers, as a diol monomer, obtained through recycling reactions from waste PET products; following the addition of BHET monomers into the reactor, adding butanediol as a chain extender so that the polymerization reaction is initiated; and following the completion of the polymerization reaction, obtaining polyurethane suitable for use as an additive in modified bituminous mixtures.

A method for preparing a modified bituminous mixture is also developed according to the present invention using the polyurethane as an additive obtained through said polyurethane synthesis process, the method comprising the steps of fluidizing bitumen as the main component of the mixture at 130-140°C; transferring the fluidized bitumen into a mechanical mixer running at 120 rpm stirring speed; producing a polyurethane-bitumen mixture by adding polyurethane, in hot form, obtained through said polyurethane synthesis process to bitumen in said mixer while stirring process continues; stirring this mixture for a predetermined time at a predetermined stirring speed to obtain a homogeneous polyurethane-bitumen mixture; following the completion of the stirring process, obtaining a homogeneous polyurethane-added modified bituminous mixture.

According to the present invention, also a method for adding SBS to bitumen comprising the polyurethane additive obtained through said method is developed, this method comprising the steps of adding a 10% amount of the total of additive to be added, each at 3-minute intervals, to the fluidized polyurethane-added bitumen at 135°C using a mechanical mixer at 400 rpm speed and preparing the bitumen modified with polyurethane and SBS.

The present invention also discloses a modified bituminous mixture obtained according to said methods, the mixture comprising polyurethane synthesized through polymerization reaction using BHET monomers, as a diol monomer, obtained through a recycling reaction of waste PET products, MDI as a diisocyanate monomer, and butanediol as a chain extender.

The whole methods developed according to the present invention provide an enhancement in the performance and durability of bitumen used in improving the properties of asphalt, wherein either only the polyurethane that is synthesized through the synthesis process according to the present invention is added to bitumen, or SBS and said polyurethane are added together to bitumen. By virtue of using polyurethane alone or together with SBS, the use of SBS having a tonnage price more than that of bitumen is reduced so that a method is developed with more reduced costs. Additionally, by virtue of using polyurethane obtained through the recycling of waste PET, a product is achieved which is not only of low-cost, but also is environment friendly. Thus, by providing bitumen with the polyurethane additive obtained through the overall methods developed according to the present invention, modified bitumen/asphalt products are achieved having lower cost, higher quality as compared to pure bitumen and asphalt in terms of quality/performance/strength, and an increased production volume.

### Object of Invention

The object of the present invention is to develop a low-cost, environment frienly and high-performance modified bituminous mixture and a production method thereof, for use in asphalt pavements, aiming to prevent heat- and fatigue-induced crack- and rutting-related problems in asphalt pavements.

Another object of the present invention is to develop a polyurethane synthesis process providing the synthesis of polyurethanes to be used as an additive in modified bituminous mixtures.

A further object of the present invention is to develop a modified bituminous mixture and a preparation method thereof, wherein polyethylene terephthalate (PET) emerging as a waste in plastic production plants is made use of and an alternative field of use is created for waste PET.

Still a further object of the present invention is to develop a modified bituminous mixture and a preparation method thereof, wherein a more environmental friendly modified mixture is obtained as a result of utilizing polyurethane synthesized from waste PET.

Still another object of the present invention is to develop a product and a preparation method thereof, enabling to use a relatively reduced amount of SBS in bitumen by using polyurethane synthesized from waste PET together with SBS, and thus enhancing the performance of the resulting product.

Yet another object of the present invention is to develop a modified bituminous mixture and a preparation method thereof, reducing the costs of asphalt production without reducing the performance of asphalt.

### Description of Invention

Bitumen is obtained from the processing of crude oil and used mainly in asphalt production. On the other hand, because of both extreme hot or cold climates, and the invariably increasing number of vehicles, the performance of bitumen produced and therefore of asphalts comprising bitumen are not satisfactory and they fail to show the required durability. Deformed asphalt pavements have to be renewed regularly and/or subjected to maintenance-repair works, this causing both environmental and economic burdens. Reinforced modified bituminous mixtures are produced in the art to solve these problems. In the modified mixtures produced is used styrene-butadiene-styrene (SBS) as an additive, but this polymeric additive is quite expensive and increases the costs. In order to solve this problem, a synthesis process for polyurethane suitable for use as an additive in bituminous mixtures, as well as a modified bituminous mixture and a preparation method thereof have been developed, said mixture comprising the synthesized polyurethane and enhancing the performance of asphalt without increasing the production cost thereof.

Any items produced as a result of any commercial activity and left around after use are classified as "waste", wherein polyethylene terephthalate (PET) is similarly a waste material occurring in huge amounts as a result of producing and using plastic products being left around following its use. According to the present invention, a polyurethane synthesis process has been developed wherein waste polyethylene terephthalate (PET) is utilized. In the process developed, waste PET products are subjected to a recycling reaction through a glycolysis reaction to result in Bis-Hydroxyethyl terephthalate (BHET) monomers. Then, according to the present invention, polyurethane is synthesized for use as an additive in modified bituminous mixtures through a polymerization reaction of diisocyanate monomer, diol monomer, and chain extender, wherein BHET obtained as a result of the recycling reaction is used in the form of diol monomer. By virtue of this polyurethane synthesis process developed, BHET monomers obtained through recycling reactions of Waste PET are reacted with a diisocyanate, preferably 4,4'-Methylene diphenyl diisocyanate (MDI), through a polymerization reaction, and as a result of this reaction, polyurethane for use as a bitumen additive is synthesized. In addition, a method is developed for preparing modified bitumen comprising polyurethane synthesized according to the present invention preferably along with SBS, wherein homogeneous and easily-applicable modified bituminous mixtures are prepared by adding polyurethane alone or preferably adding polyurethane together with SBS to bitumen. According to the present invention, both alternative fields of use are provided for waste plastics, and improvements are made in asphalt quality without increasing its production costs.

In the synthesis process of polyurethane developed according to the present invention, Bis-Hydroxyethyl Terephthalate (BHET) monomers are synthesized from waste Polyethylene Terephthalate (PET) through a recycling reaction. The stage of synthesizing BHET monomers comprises the steps of washing waste PET products, which are gathered in collection areas where wastes resulting from production processes of plastic products are collected, with a predetermined amount of water to free PET products from impurities; drying the washed waste PET products; turning the dried waste PET products into scrap PET, preferably of a size of 1cm×1cm, suitable for use in the recycling reactions of waste PET products; loading the scrap PETs preferably into a glass-made, preferably three-neck reactor in which the recycling reaction is to be carried out; adding Ethylene Glycol into the reactor to which scrap PETs were loaded to carry out the recycling reaction; conducting the recycling reaction in the presence of at least one catalyst (preferably zinc acetate catalyst) preferably at a temperature from 195 to 200°C for preferably 3 hours; following the completion of the recycling reaction, obtaining a product comprising monomeric His-Hydroxyethyl Terephthalate (BHET), ethylene glycol and impurities (long-chain oligomers and unreacted scrap PET); in order to purify the obtained product from said impurities, washing it with a predetermined amount of water; taking into a first container the fractions (long-chain oligomers and unreacted scrap PET) from the washed product, which make up impurities in the product by remaining water-insoluble; after separating the fraction forming impurities from the product, taking the remaining BHET monomers and ethylene glycol into a second container; crystallizing the BHET monomers by helding the remaining BHET monomers and ethylene glycol in the second container in a cooler at +4 to +6°C preferably for 24 hours; generating a phase separation with the crystallized BHET monomers sinking to the bottom in ethylene glycol; filtering the sunk BHET monomers to separate them from ethylene glycol; obtaining BHET monomers suitable for use in polyurethane reactions by purifying BHET monomer crystals obtained after filtration from the whole ethylene glycol.

The polyurethane suitable for use as an additive in modified bituminous mixtures developed according to the present invention is synthesized through the polymerization reaction of diisocyanate monomer, diol monomer and chain extender, this synthesis process comprising the steps of adding 4,4'-methylene diphenyl diisocyanate (MDI) in melt form preferably at 80°C, as the isocyanate monomer, to a reactor (preferably a batch reactor) comprising preferably a top mechanical mixer; adding preferably dropwise into the MDI-containing reactor the BHET monomers in melt form preferably at 110°C, as the diol monomer, obtained from said waste polyethylene terephthalate (PET) products; following the addition of BHET into the reactor, adding butanediol as the chain extender so that the polymerization reaction is initiated; following the completion of the polymerization reaction preferably under a nitrogen blanket, obtaining polyurethane suitable for use as an additive in modified bituminous mixtures.

In a representative embodiment of the polyurethane synthesis process developed according to the present invention, BHET, butanediol and MDI are added to said reactor preferably in a mass proportion of 1:1:8 (BHET:Butanediol:MDI).

In an alternative embodiment of the polyurethane synthesis process developed according to the present invention, the polymerization reaction is conducted in the presence of at least one catalyst. The addition of catalyst depends on the conditions of the polymerization reaction and on the reactivities of the monomers added.

In the polyurethane synthesis process developed according to the present invention, BHET monomers obtained from recycling reactions are used directly in the polyurethane synthesis reactions. Thus, the source of diols required for use in polyurethane synthesis is obtained from Waste PETs so that a reduction is achieved in the costs of polyurethane synthesis.

Also a method for preparing a modified bituminous mixture is developed according to the present invention using the polyurethane obtained through said polyurethane synthesis process as an additive, the method comprising the steps of fluidizing bitumen, as the main component of the mixture, preferably at 135°C; transferring the fluidized bitumen into a mechanical mixer preferably running at 120 rpm stirring speed; obtaining a polyurethane-bitumen mixture by adding polyurethane, in hot form, obtained through said polyurethane synthesis process to bitumen in said mixer while stirring process continues; stirring further this mixture for a predetermined time (preferably 60 minutes) at a predetermined stirring speed (preferably 500 rpm) to obtain a homogeneous polyurethane-bitumen mixture; and following the completion of the stirring process, obtaining a homogeneous polyurethane-added modified bituminous mixture.

In the method of preparing modified bituminous mixture according to the present invention, the polyurethane is added to hot fluidized bitumen so that both a homogeneous distribution of polyurethane is ensured and energy is saved by eliminating extra heating costs. Apart from the method according to the present invention, due to cooling down of the polyurethane following its synthesis, a material is obtained which is hard and does not soften under high temperatures. Here, no softening or melting is observed after synthesized polyurethane is left in a drying oven at 140-160°C; however structural degradation is seen after exposure to heat for a long period of time. It is also seen here that when such solid polyurethane is used in bitumen at 180°C, it remains in the form of hard particles. These results, in turn, show that synthesized polyurethane produces a stronger bond structure as it is cooled down and a duromeric polymer structure is obtained. Therefore, in order to be able to prepare synthesized polyurethane and bituminous mixtures homogeneously, the method has been developed so that bitumen is added in a hot and fluidized form following the synthesis, and it has been concluded that the results indicated cannot be obtained when it is stepped out of this method.

The properties achieved when synthesized polyurethane according to the present method was added into bitumen in various proportions are given in Table 1.

**Table 1. Properties of Modified Bitumen Comprising Increasing Proportions of Synthesized Polyurethane Additive**

| | **PURE BITUM EN** | **Bitumen with 3% SBS additive** | **Bitumen with 4.5% SBS additive** | **Bitumen with 3% synthesize d polyuretha ne additive** | **Bitumen with 5% synthesi zed polyuret hane additive** | **Bitumen with 7% synthesize d polyuretha ne additive** |
|---|---|---|---|---|---|---|
| **Softening point, °C** | 48.2 | 51.9 | 62.0 | 52 | 52 | 51 |
| **DSR (Dynamic Shear Rheometer), °C** | 66 | 70.1 | 77.4 | 70.6 | 72.3 | 69.7 |
| **Elastic Recovery, %** | 5.4 | 47.25 | 82.3 | 14 | 7.8 | 9.3 |

When the results in Table 1 are reviewed, it can be seen that when the synthesized polyurethane is added to bitumen, the properties of bitumen are improved as compared to pure bitumen, and that when 3% is added, it provides the same improvement that was achieved by adding 3% SBS additive. On the other hand, no effect was seen when the amount of added synthesized polyurethane was increased above 3%. It is assumed here that there may be subgroups in bitumen with which polyurethane reacts with, and that all these subgroups reacts with 3% polyurethane additive and that any more polyurethane additive exceeding this proportion cannot make any further improvement that is observed in bitumen. For this reason, it is concluded that the amount of synthesized polyurethane that can be added to bitumen is restricted to 3%, and that using this proportion provides similar improvements both in DSR and softening point to that provided by 3% SBS.

In a preferred embodiment of the method for preparing a polyurethane-added modified bituminous mixture developed according to the present invention, the method also comprises the steps of adding a predetermined amount of SBS, preferably divided into 10 equal portions, preferably each at 3-minute intervals, preferably at 180°C, into the obtained polyurethane-added modified bituminous mixture using a mechanical mixer running at 400 rpm; following the addition of SBS, obtaining a polyurethane- and SBS-added modified bituminous mixture; stirring further this mixture for a predetermined amount of time (preferably 60 minutes) at a predetermined stirring speed (preferably 400 rpm) to obtain a homogeneous polyurethane- and SBS-added modified bituminous mixture; following the completion of the stirring step, obtaining a homogeneous polyurethane- and SBS-added modified bituminous mixture.

The present invention also discloses a modified bituminous mixture obtained according to said methods, the mixture comprising polyurethane synthesized through a polymerization reaction using BHET monomers, as a diol monomer, obtained through a recycling reaction of waste PET products, MDI as a diisocyanate monomer, and butanediol as a chain extender.

In exemplary embodiments of the method for preparing modified bitumen according to the present invention, polyurethane-added or polyurethane- and SBS-added modified bituminous mixture comprises 3% or less than 3% (preferably 3%) by weight of hot polyurethane obtained according to the present method, and 3% or less than 3% (preferably 3%) by weight of preferably solid, powder-form SBS. The test results and performance classification, according to the standards TS EN 12591 and ASSHTO MP1, of modified bitumens prepared in exemplary embodiments of the present invention are given in Table 2.

**Table 2. Test results of Additive-Free and Modified Bitumens according to Standards EN 12591 and ASSTHO MP1**

| | **Test Name** | **Standard No** | **Unit** | **Additiv e-free bitume n** | **Modified bitumen** | | | |
|---|---|---|---|---|---|---|---|---|
| | | | | | **3% SBS** | **4.5% SBS** | **3% synth esized polyur ethan e** | **3% synth esized polyur ethan e and 3% SBS** |
| EN 12591 | Penetration | TS EN 1426 | 0.1 mm | 58.0 | 39.0 | 42.6 | 39.4 | 37 |
| | Softening Point | TS EN 1427 | °C | 48.2 | 51.9 | 62.0 | 52.1 | 61.2 |
| | Elastic Recovery | TS EN 13398 | % | 5.4 | 47.3 | 82.3 | 14 | 81.75 |
| | Thin film Heating Test (RT-FOT) | TS EN 12607-1 | - | + | + | + | + | + |
| | Change in Mass | - | % | 0.18 | 0.16 | 0.14 | 0.28 | 0.22 |
| | Retained Penetration | TS EN 1426 | % | 74 | 74 | 64 | 76 | 73 |
| | Softening Point after RT-FOT | TS EN 1427 | °C | 52.4 | 58.5 | 62.9 | 55.4 | 66 |
| | Softening Point Increase | - | °C | 4.2 | 6.6 | 0.9 | 3.4 | 4.2 |
| | Flash Point | TS EN ISO 2592 | °C | 382.8 | 332 | 328 | 336 | 336 |
| Viscosity | | TS EN 12595 | cP | 382.8 | 729 | 1192 | 460.9 | 1182 |
| Elastic recovery | | TS EN 13398 | % | 5.4 | 47.3 | 85.3 | 14 | 81.8 |
| SUPE RPAV E | Dynamic Shear Rheometer | TS EN 14770 | °C | 66 | 70.1 | 77.4 | 70.6 | 79 |
| | (DSR) | | | | | | | |
| | DSR After RT-FOT | TS EN 14770 | °C | 64.1 | 74.3 | 78.2 | 76.1 | 77.5 |
| | Pressurized Aging (PAV) | TS EN 14769 | - | + | + | + | + | + |
| | DSR After PAV | TS EN 14770 | °C | 25.7 | 19 | 25.2 | 26.5 | 20.3 |
| | Bending Beam Rheometer Test (BBR) | TS EN 14771 | °C | -22 | -16 | -16 | -22 | -16 |
| | **Performance Class** | | | **64-22** | **70-16** | **76-16** | **70-22** | **76-16** |

It can be seen in Table 2 that the performance class of polyurethane- and SBS-added modified bitumens prepared according to the present invention shows an enhancement as compared to pure bitumen. However, the performance class provided with 4.5% SBS additive is now provided with less SBS in the presence of polyurethane (3% SBS + 3% polyurethane). Additionally, the use of SBS together with the developed polyurethane additive provides a synergistic effect on the elastic recovery, showing a higher increase as compared to when the additives are used alone. Numerically, elastic recovery values of 47.3% and 14% are achieved respectively when 3% SBS and 3% Polyurethane are used alone. However, when the same proportions of SBS and polyurethane are used together, the elastic recovery is determined as 81.8%. Furthermore, the developed polyurethane additive does not increase the viscosity property, which effects the stirring and compacting temperatures of bitumen in asphalt applications, as high as it is increased by SBS, and when it is used together with SBS, it ensures the same performance as compared to 4.5% SBS additive, but results in an ease of processability at a lower viscosity.

The effect of developed polyurethane on the performance of bitumen is again seen in Table 2 with the performance results of modified bitumens with individual SBS (3%) and polyurethane (3%) additives at the same proportion. While polyurethane additive ensures the same high-temperature performance enhancement (increase from 64 to 70) in bitumen as it is ensured by SBS, it does not negatively affect the low-temperature performance of bitumen as SBS does (SBS lowers it from -22 to -16, but it keeps it at -22). Thus, when compared with the use of SBS at the same proportion, it can be stated that the developed polyurethane additive provides better results in the cold-climate performance of bitumen as compared to SBS. So, it is seen that the performance enhancement provided in bitumen when the developed polyurethane and SBS are used together can now be provided with the developed polyurethane additive.

The whole methods developed according to the present invention provide an enhancement in the performance and durability of bitumen used in asphalt applications, wherein either only the polyurethane that is synthesized through the synthesis process according to the present invention is added to bitumen, or SBS and said polyurethane are added together to bitumen. By virtue of using polyurethane together with SBS, the use of SBS which is purchased from abroad, increases the current account deficit and has a tonnage price more than that of bitumen is reduced so that a method is developed with more reduced costs. Additionally, by virtue of using polyurethane obtained through the recycling of waste PET, a product is achieved which is not only of low-cost, but also is environment friendly. Thus, by providing bitumen with the polyurethane additive obtained through the overall methods developed according to the present invention, modified bitumen/asphalt products are achieved having lower cost, higher quality as compared to pure bitumen and asphalt in terms of quality/performance/strength, and an increased production volume.

## Claims

1. A method for preparing a modified bituminous mixture, **characterized by** comprising the steps of
- Washing waste PET products gathered in collection areas with a predetermined amount of water to free PET products from impurities;
- Drying the washed waste PET products;
- Turning the dried waste PET products into scrap PET suitable for use in the recycling reactions;
- Loading the scrap PETs into a reactor in which the recycling reaction is to be carried out;
- Adding Ethylene Glycol into the reactor to which the scrap PETs were loaded to carry out the recycling reaction;
- Conducting the recycling reaction in the presence of at least one catalyst;
- Following the completion of the recycling reaction, obtaining a product comprising monomeric BHET, ethylene glycol and impurities;
- In order to purify the obtained product from said impurities, washing it with a predetermined amount of water;
- Taking the fractions from the washed product, which make up impurities in the product by remaining water-insoluble, into a first container;
- After separating the fraction forming impurities from the product, taking the remaining BHET monomers and ethylene glycol into a second container;
- Crystallizing the BHET monomers by keeping the remaining BHET monomers and ethylene glycol in the second container in a cold environment;
- Generating a phase separation with the crystallized BHET monomers sinking to the bottom in ethylene glycol;
- Filtering the sunk BHET monomers to separate them from ethylene glycol;
- Obtaining BHET monomers suitable for use in polyurethane reactions by purifying BHET monomer crystals obtained after filtration from the whole ethylene glycol.
- adding MDI as an isocyanate monomer into a reactor comprising a mechanical mixer;
- adding into the MDI-comprising reactor BHET monomers, as a diol monomer, obtained through recycling reactions from waste PET products;
- following the addition of BHET monomers into the reactor, adding butanediol as a chain extender so that the polymerization reaction is initiated;
- following the completion of the polymerization reaction, obtaining polyurethane suitable for use as an additive in modified bituminous mixtures.
- Fluidizing bitumen, as the main component of the mixture, at 130-140°C;
- Transferring the fluidized bitumen into a mechanical mixer;
- Producing polyurethane-bitumen mixture by adding polyurethane as an additive in hot form to bitumen, whose temperature is between 130-140°C,in said mixer while stirring process continues, wherein the polyurethane is synthesized as a result of a polymerization reaction of BHET monomers, as a diol monomer obtained through a recycling reaction of waste PET products with diisocyanate monomer and a chain extender as a diol monomer is synthesized as a result of a polymerization reaction of BHET monomers, , obtained through a recycling reaction of waste PET products with diisocyanate monomer and a chain extender;
- Stirring further this mixture for a predetermined time at a predetermined stirring speed to obtain a homogeneous polyurethane-bitumen mixture;
- Following the completion of the stirring process, obtaining a homogeneous polyurethane-added modified bituminous mixture.

2. The method for preparing a modified bituminous mixture according to claim 1, **characterized in that** the bitumen is fluidized at 135°C.

3. The method for preparing a modified bituminous mixture according to claim 1, **characterized in that** the method further comprises the steps of
- adding a predetermined amount of SBS to the obtained polyurethane-added modified bituminous mixture;
- obtaining a polyurethane- and SBS-added modified bituminous mixture;
- stirring further this mixture for a predetermined time at a predetermined stirring speed to obtain a homogeneous polyurethane- and SBS-added modified bituminous mixture;
- following the completion of the stirring process, obtaining a homogeneous polyurethane- and SBS-added modified bituminous mixture.

4. The method for preparing a modified bituminous mixture according to claim 3, **characterized in that** the SBS is divided into 10 equal portions and is added in this way to polyurethane-added modified bituminous mixture at 180°C.

5. The method for preparing a modified bituminous mixture according to claim 3, **characterized in that** 10% of the total amount of SBS to be added is added each time at 3-minute intervals to the polyurethane-added modified bituminous mixture.

6. The method for preparing a modified bituminous mixture according to claim 3, **characterized in that** the polyurethane- and SBS-added modified bituminous mixture is stirred for 60 minutes.

7. The method for preparing a modified bituminous mixture according to claim 1, **characterized in that** MDI is added in a melt form at 80°C.

8. The method for preparing a modified bituminous mixture according to claim 1, **characterized in that** BHET monomers are added dropwise in a melt form at 110°C.

9. The method for preparing a modified bituminous mixture according to claim 1, **characterized in that** said mixer is coupled to the reactor from the top.

10. The method for preparing a modified bituminous mixture according to claim 1, **characterized in that** the polymerization reaction is carried out under a nitrogen blanket.

11. The method for preparing a modified bituminous mixture according to claim 1, **characterized in that** BHET monomers, butanediol and MDI are added to said reactor in a mass proportion of 1:1:8 (BHET:butanediol:MDI).

12. The method for preparing a modified bituminous mixture according to claim 1, **characterized in that** the remaining BHET monomers and ethylene glycol present in the second container are held in a cooler at 4 to 6°C for 24 hours.

13. The method for preparing a modified bituminous mixture according to claim 1, **characterized in that** said reactor is made of glass and said catalyst is a zinc acetate catalyst.

14. The method for preparing a modified bituminous mixture according to claim 1, **characterized in that** said reactor is three-necked.

15. The method for preparing a modified bituminous mixture according to claim 1, **characterized in that** said recycling reaction is carried out at a temperature of 195-200°C and said recycling reaction is carried out for 3 hours.

## Patentansprüche

1. Verfahren zum Herstellen einer modifizierten bituminösen Mischung, **dadurch gekennzeichnet, dass** es die Schritte aufweist
- Waschen von Abfall-PET-Produkten, die in Sammelstationen gesammelt worden sind, mit einer vorgegebenen Menge von Wasser, um die PET-Produkte von Verunreinigungen zu befreien,
- Trocknen der gewaschenen Abfall-PET-Produkte,
- Umwandeln der getrockneten Abfall-PET-Produkte in PET-Abfälle, die zur Verwendung in Recycling-Reaktionen geeignet sind,
- Füllen der PET-Abfälle in einen Reaktor, in dem die Recycling-Reaktion durchgeführt werden soll,
- Hinzufügen von Ethylenglykol in den Reaktor, in den die PET-Abfälle eingeführt worden sind, um die Recycling-Reaktion ablaufen zu lassen,
- Durchführen der Recycling-Reaktion in Anwesenheit von wenigstens einem Katalysator,
- nach Abschluss der Recycling-Reaktion Erhalt eines Produkts, das monomeres BHET, Ethylenglykol und Verunreinigungen enthält,
- Waschen des erhaltenen Produkts mit einer vorgegebenen Menge von Wasser, um es von den Verunreinigungen zu befreien,
- Aufnehmen der Fraktionen des gewaschenen Produkts, die Verunreinigungen in dem Produkt bilden, indem sie wasserunlöslich bleiben, in einen ersten Behälter,
- nach Trennen der Fraktion, die die Verunreinigungen bilden, von dem Produkt, Aufnehmen des verbleibenden monomeren BHET und des Ethylenglykols in einen zweiten Behälter,
- Kristallisieren der BHET-Monomere, indem die verbliebenen BHET-Monomere und das Ethylenglykol in dem zweiten Behälter einer kalten Umgebung ausgesetzt werden,
- Erzeugen einer Phasentrennung, wobei die kristallisierten BHET-Monomere im Ethylenglykol zu Boden sinken,
- Filtern der abgesunkenen BHET-Monomere, um sie von dem Ethylenglykol zu trennen,
- Erhalt von BHET-Monomeren, die zur Verwendung in Polyurethanreaktionen geeignet sind, indem die BHET-Monomerkristalle, die nach der Filtration des gesamten Ethylenglykols erhalten wurden, gereinigt werden,
- Hinzufügen von MDI als monomeres Isocyanat in einen Reaktor, der einen mechanischen Mischer aufweist,
- Hinzufügen von BHET-Monomeren, als Diol-Monomere, die durch die Recycling-Reaktionen aus den Abfall-PET-Produkten erhalten worden sind, in den MDI enthaltenden Reaktor,
- nach der Hinzufügung von BHET-Monomeren in den Reaktor Hinzufügen von Butandiol als Kettenverlängerer, so dass die Polymerisationsreaktion eingeleitet wird,
- nach Abschluss der Polymerisationsreaktion Erhalt von Polyurethan, das zur Verwendung als Zusatzstoff in modifizierten bituminösen Mischungen geeignet ist,
- Verflüssigen des Bitumens, als der Hauptkomponente der Mischung, bei 130-140°C,
- Überführen des verflüssigten Bitumens in einen mechanischen Mischer,
- Erzeugen einer Polyurethan-Bitumen-Mischung, indem Polyurethan als ein Zusatzstoff in heißer Form dem Bitumen, dessen Temperatur zwischen 130-140°C beträgt, in dem Mischer hinzugefügt wird, während der Mischprozess fortfährt, wobei das Polyurethan durch eine Polymerisationsreaktion von BHET-Monomeren synthetisiert ist, als Diol-Monomere, die durch eine Recycling-Reaktion von Abfall-PET-Produkten mit Diisocyanat-Monomer und einem Kettenverlängerer erhalten wurden, als Diol-Monomer als Resultat einer Polymerisationsreaktion von BHET-Monomeren synthetisiert ist, erhalten durch eine Recycling-Reaktion von Abfall-PET-Produkten mit Diisocyanat-Monomeren und einem Kettenverlängerer,
- weiteres Rühren dieser Mischung für eine vorgegebene Zeit mit einer vorgegebenen Rührgeschwindigkeit, um eine homogene Polyurethan-Bitumen-Mischung zu erhalten,
- nach Abschluss des Rührprozesses Erhalt einer homogenen, unter Polyurethan-Hinzufügung modifizierten bituminösen Mischung.

2. Verfahren zur Herstellung einer modifizierten bituminösen Mischung nach Anspruch 1, **dadurch gekennzeichnet, dass** das Bitumen bei 135°C verflüssigt wird.

3. Verfahren zur Herstellung einer modifizierten bituminösen Mischung nach Anspruch 1, **dadurch gekennzeichnet, dass** das Verfahren weiter die Schritte aufweist
- Hinzufügen einer vorgegebenen Menge von SBS zu der erhaltenen modifizierten bituminösen Mischung, der Polyurethan hinzugefügt worden ist,
- Erhalten einer modifizierten bituminösen Mischung, der Polyurethan und SBS hinzugefügt worden ist,
- weiteres Rühren dieser Mischung für eine vorgegebenen Zeit bei einer vorgegebenen Rührgeschwindigkeit, um eine homogene modifizierte bituminöse Mischung, der Polyurethan und SBS hinzufügt worden ist, zu erhalten,
- nach dem Abschluss des Rührprozesses Erhalt einer homogenen modifizierten bituminösen Mischung, der Polyurethan und SBS hinzugefügt worden ist.

4. Verfahren zur Herstellung einer modifizierten bituminösen Mischung nach Anspruch 3, **dadurch gekennzeichnet, dass** das SBS in 10 gleich große Portionen aufgeteilt wird und auf diese Weise der modifizierten bituminösen Mischung, der Polyurethan hinzugefügt worden ist, bei 180°C hinzugefügt wird.

5. Verfahren zur Herstellung einer modifizierten bituminösen Mischung nach Anspruch 3, **dadurch gekennzeichnet, dass** von der Gesamtmenge von SBS, die hinzugefügt werden soll, jedes Mal 10% der modifizierten bituminösen Mischung, der Polyurethan hinzugefügt worden ist, hinzugefügt wird.

6. Verfahren zur Herstellung einer modifizierten bituminösen Mischung nach Anspruch 3, **dadurch gekennzeichnet, dass** die modifizierte bituminöse Mischung, der Polyurethan und SBS hinzugefügt worden ist, für 60 Minuten gerührt wird.

7. Verfahren zur Herstellung einer modifizierten bituminösen Mischung nach Anspruch 1, **dadurch gekennzeichnet, dass** MDI in geschmolzener Form bei 80°C hinzugefügt wird.

8. Verfahren zur Herstellung einer modifizierten bituminösen Mischung nach Anspruch 1, **dadurch gekennzeichnet, dass** BHET-Monomere tropfenweise, in geschmolzener Form, bei 110°C hinzugefügt werden.

9. Verfahren zur Herstellung einer modifizierten bituminösen Mischung nach Anspruch 1, **dadurch gekennzeichnet, dass** der Mischer von oben an dem Reaktor angebracht ist.

10. Verfahren zur Herstellung einer modifizierten bituminösen Mischung nach Anspruch 1, **dadurch gekennzeichnet, dass** die Polymerisationsreaktion mit einer Stickstoffüberlagerung durchgeführt wird.

11. Verfahren zur Herstellung einer modifizierten bituminösen Mischung nach Anspruch 1, **dadurch gekennzeichnet, dass** BHET-Monomere, Butandiol und MDI dem Reaktor in einem Massenverhältnis von 1:1:8 (BHT:Butandiol:MDI) hinzugefügt werden.

12. Verfahren zur Herstellung einer modifizierten bituminösen Mischung nach Anspruch 1, **dadurch gekennzeichnet, dass** die in dem zweiten Behälter vorhandenen verbliebenen BHET-Monomere und Ethylenglykol in einer Kühlvorrichtung für 24 Stunden bei 4 bis 6°C gehalten werden.

13. Verfahren zur Herstellung einer modifizierten bituminösen Mischung nach Anspruch 1, **dadurch gekennzeichnet, dass** der Reaktor aus Glas hergestellt ist und der Katalysator ein Zinkazetat-Katalysator ist.

14. Verfahren zur Herstellung einer modifizierten bituminösen Mischung nach Anspruch 1, **dadurch gekennzeichnet, dass** der Reaktor dreihalsig ist.

15. Verfahren zur Herstellung einer modifizierten bituminösen Mischung nach Anspruch 1, **dadurch gekennzeichnet, dass** die Recycling-Reaktion bei einer Temperatur von 195-200°C durchgeführt wird und die Recycling-Reaktion über 3 Stunden ausgeführt wird.

## Revendications

1. Procédé de préparation d'un mélange bitumineux modifié, **caractérisé en ce qu'**il comprend les étapes consistant à
- Laver des déchets de produits PET recueillis dans des zones de collecte avec une quantité prédéterminée d'eau pour libérer des produits PET de leurs impuretés ;
- Sécher des déchets de produits PET lavés ;
- Transformer les déchets de produits PET séchés en débris PET utilisables dans les réactions de recyclage ;
- Charger des débris PET dans un réacteur dans lequel la réaction de recyclage doit avoir lieu ;
- Ajouter l'éthylène glycol dans le réacteur dans lequel les débris PET ont été chargés pour effectuer la réaction de recyclage ;
- Conduire la réaction de recyclage en présence d'au moins un catalyseur ;
- À l'issu de la réaction de recyclage, obtenir un produit comprenant du BHET monomère, de l'éthylène glycol et des impuretés ;
- Afin de purifier le produit obtenu desdites impuretés, le laver avec une quantité prédéterminée d'eau ;
- Prendre les fractions du produit lavé, qui constituent les impuretés du produit en restant insolubles dans l'eau, dans un premier récipient ;
- Après avoir séparé la fraction formant les impuretés du produit, prendre les monomères BHET et l'éthylène glycol restants dans un second récipient ;
- Cristalliser les monomères BHET en conservant les monomères BHET restants et l'éthylène glycol dans le second récipient dans un environnement froid ;
- Générer une séparation de phase, les monomères BHET cristallisés coulant au fond dans l'éthylène glycol ;
- Filtrer les monomères BHET coulés pour les séparer de l'éthylène glycol ;
- Obtenir des monomères BHET utilisables dans les réactions de polyuréthane en purifiant les cristaux de monomères BHET obtenus après filtration à partir de l'éthylène glycol entier.
- Ajouter du MDI en tant que monomère isocyanate dans un réacteur comprenant un mélangeur mécanique ;
- Ajouter dans les monomères BHET de réacteur comprenant du MDI, en tant que monomère diol, obtenus par des réactions de recyclage à partir de déchets de produits PET ;
- Après l'ajout des monomères BHET dans le réacteur, ajouter du butanediol en tant qu'un allongeur de chaîne afin d'amorcer la réaction de polymérisation ;
- À l'issu de la réaction de polymérisation, obtenir un polyuréthane utilisable comme additif dans les mélanges bitumineux modifiés.
- Fluidifier le bitume, principal composant du mélange, à 130-140°C ;
- Transférer le bitume fluidifié dans un mélangeur mécanique ;
- Produire un mélange polyuréthane-bitume en ajoutant du polyuréthane en tant qu'additif sous forme chaude au bitume, dont la température est comprise entre 130 et 140°C, dans ledit mélangeur tout en poursuivant le processus d'agitation, dans lequel le polyuréthane est synthétisé à la suite d'une réaction de polymérisation de monomères BHET, en tant que monomère diol obtenu par une réaction de recyclage de déchets de produits PET avec un monomère diisocyanate et un allongeur de chaîne en tant que monomère diol est synthétisé à la suite d'une réaction de polymérisation de monomères BHET, obtenus par une réaction de recyclage de déchets de produits PET avec un monomère diisocyanate et un allongeur de chaîne ;
- Agiter en outre ce mélange pendant une durée prédéterminée à une vitesse d'agitation prédéterminée afin d'obtenir un mélange polyuréthane-bitume homogène ;
- À l'issu du processus d'agitation, obtenir un mélange bitumineux modifié additionné de polyuréthane homogène.

2. Procédé de préparation d'un mélange bitumineux modifié selon la revendication 1, **caractérisé en ce que** le bitume soit fluidifié à 135°C.

3. Procédé de préparation d'un mélange bitumineux modifié selon la revendication 1, **caractérisé en ce que** le procédé comprend en outre les étapes consistant à
- ajouter une quantité prédéterminée de SBS au mélange bitumineux modifié additionné de polyuréthane obtenu ;
- obtenir un mélange bitumineux modifié additionné de polyuréthane et de SBS ;
- agiter en outre ce mélange pendant une durée prédéterminée à une vitesse d'agitation prédéterminée pour obtenir un mélange bitumineux modifié additionné de polyuréthane et de SBS homogène ;
- à l'issue du processus d'agitation, à obtenir un mélange bitumineux modifié additionné de polyuréthane et de SBS homogène.

4. Procédé de préparation d'un mélange bitumineux modifié selon la revendication 3, **caractérisé en ce que** le SBS est divisé en 10 portions égales et est ainsi ajouté au mélange bitumineux modifié additionné de polyuréthane à 180°C.

5. Procédé de préparation d'un mélange bitumineux modifié selon la revendication 3, **caractérisé en ce que** 10% de la quantité totale de SBS à ajouter sont ajoutés à chaque fois à des intervalles de 3 minutes au mélange bitumineux modifié additionné de polyuréthane.

6. Procédé de préparation d'un mélange bitumineux modifié selon la revendication 3, **caractérisé en ce que** le mélange bitumineux modifié additionné de polyuréthane et de SBS est agité pendant 60 minutes.

7. Procédé de préparation d'un mélange bitumineux modifié selon la revendication 1, **caractérisé en ce que** le MDI est ajouté sous forme fondue à 80°C.

8. Procédé de préparation d'un mélange bitumineux modifié selon la revendication 1, **caractérisé en ce que** les monomères BHET sont ajoutés goutte à goutte sous forme fondue à 110°C.

9. Procédé de préparation d'un mélange bitumineux modifié selon la revendication 1, **caractérisé en ce que** ledit mélangeur est couplé au réacteur par le haut.

10. Procédé de préparation d'un mélange bitumineux modifié selon la revendication 1, **caractérisé en ce que** la réaction de polymérisation est effectuée sous couverture d'azote.

11. Procédé de préparation d'un mélange bitumineux modifié selon la revendication 1, **caractérisé en ce que** les monomères BHET, le butanediol et le MDI sont ajoutés dans ledit réacteur dans une proportion massique de 1:1:8 (BH ET: butanediol: M DI).

12. Procédé de préparation d'un mélange bitumineux modifié selon la revendication 1, **caractérisé en ce que** les monomères BHET restants et l'éthylène glycol présents dans le second récipient sont maintenus dans un refroidisseur à 4 à 6°C pendant 24 heures.

13. Procédé de préparation d'un mélange bitumineux modifié selon la revendication 1, **caractérisé en ce que** ledit réacteur est en verre et que ledit catalyseur est un catalyseur à base d'acétate de zinc.

14. Procédé de préparation d'un mélange bitumineux modifié selon la revendication 1, **caractérisé en ce que** ledit réacteur est à trois cols.

15. Procédé de préparation d'un mélange bitumineux modifié selon la revendication 1, **caractérisé en ce que** la réaction de recyclage est effectuée à une température de 195 à 200°C et que ladite réaction de recyclage est effectuée pendant 3 heures.
